# EUROPÄISCHE PATENTSCHRIFT

(11) **EP 1 555 276 B1**
(45) Veröffentlichungstag und Bekanntmachung des Hinweises auf die Patenterteilung: **09.07.2008**
(21) Anmeldenummer: 04029213.8
(22) Anmeldetag: 09.12.2004
(51) Int. Cl.: C08G 18/61, C09D 175/02

(54) **Dispersionen enthaltend Organopolysiloxan-Polyharnstoff-Copoymere**
Dispersions containing organopolysiloxane-polyurea copolymers
Dispersions contenant des coploymères de polysiloxanes organiques et de polyurée

(30) Priorität: 18.12.2003 DE 10359704
(43) Veröffentlichungstag der Anmeldung: 20.07.2005
(73) Patentinhaber: Wacker Chemie AG, 81737 München (DE)
(72) Erfinder: Ziche, Wolfgang, Dr., 01665 Diera-Zehren (DE)
(74) Vertreter: Budczinski, Angelika

(56) Entgegenhaltungen:
- EP-A- 0 380 236
- EP-A- 1 336 683
- WO-A-03/014180
- WO-A-03/097757

## Beschreibung

Die Erfindung betrifft wässrige Dispersionen enthaltend Organopolysiloxan-Polyharnstoff-Copolymere sowie ein Verfahren zu deren Herstellung.

Wässrige Polyurethan-Polyharnstoff-Dispersionen und Verfahren zu ihrer Herstellung sind bekannt. Hierzu sei z.B. auf DE 11 84 946 B, DE 11 78 586 B, DE 14 95 745 C3, DE 20 19 324 C3, DE 28 07 861 A1 verwiesen. Die beschriebenen Dispersionen beruhen auf dem Prinzip, in eine makromolekulare Kette eines Polyurethan-Polyharnstoff-Moleküls hydrophile Zentren einzubauen. Diese hydrophilen Zentren oder so genannten inneren Emulgatoren sind in den bekannten Dispersionen ionische Gruppen oder Etherfunktionen. Die ionischen Gruppen werden entweder in das Präpolymer in Form spezieller Diole eingebaut oder als modifizierte Amine zur Kettenverlängerung der Präpolymeren eingesetzt, die je mindestens zwei endständige NCO-Funktionen besitzen.

Dispersionen, die unter Verwendung organischer Lösungsmittel bei der Polyaddition hergestellt werden, haben den Nachteil, dass bei ihrer Herstellung das organische Lösungsmittel aufwändig abdestilliert und recycled werden muss. Lösungsmittelfreie Verfahren zur Herstellung von Polyurethan-Dispersionen sind z.B. das sogenannte Schmelzdispergierverfahren, beispielsweise gemäß DE 17 70 068 C3, in dem ein mit ionischen Gruppen modifiziertes Oligourethan eingesetzt wird; es eignet sich vor allem zur Herstellung von kationisch modifizierten Polyurethanen bzw. zur Herstellung von anionischen Carboxylatgruppen-haltigen Polyurethanen. Die dabei erforderliche Kombination von Verfahrensschritten (Isocyanatpolyadditionsreaktion und eine Kettenverlängerungsreaktion) stellt einen erhöhten Aufwand dar.

Von einem Sulfonat- und NCO-Gruppen-haltigen Präpolymer ausgehend werden während des Dispergierens Umsetzungen im Sinne der Isocyanatpolyadditionsreaktion mit gegenüber NCO-Gruppen reaktiven difunktionellen Verbindungen durchgeführt. Hierzu sei z.B. auf DE 2 446 440 C3 verwiesen. Nachteilig ist, dass so nur Sulfonatgruppen-haltige Polymere erhalten werden.

Aus DE 199 58 525 A1 bekannt sind auch Dispersionen, die aus silylfunktionellen Polymeren gewonnen werden. Nachteilig ist auch hier, dass die speziellen Polymere in einem separaten Schritt synthetisiert werden müssen. Polyurethan-Dispersionen mit Disiloxangruppen sind aus DE 44 13 562 A1 bekannt. Auch hier ist eine spezielle Synthese von Präpolymeren nötig, zudem ist der Siloxangehalt äußerst niedrig. Bekannt ist die Herstellung von Polyharnstoff durch Grenzflächen-Polyaddition gemäß DE 19 46 942 A ausgehend von monomeren Diisocyanaten und Diaminen in wässriger Lösung, wobei die Verwendung siloxanhaltiger Polymere in diesem Verfahren nicht beschrieben wird.

Organopolysiloxan-Polyharnstoff-Blockcopolymere sind bekannt und werden aus aminoalkylterminierten Siloxanen und Diisocyanaten hergestellt. Hierzu sei z.B. auf Polymer, Bd. 25 (1984), S. 1800 f. verwiesen. Vorteilhafte Eigenschaften dieser Produkte sind der mögliche hohe Siloxan-Anteil (>90 %) und ihre Thermoplastizität. Nachteilig ist, dass sie wiederum nur durch den Einbau von ionischen oder polaren Gruppen, z.B. Polyether leicht dispergierbar sind, so dass Eigenschaften der nicht derivatisierten Organopolysiloxan-Polyharnstoff-Blockcopolymere in einer solchen Dispersion nicht gegeben sind.

Gegenstand der Erfindung sind wässrige Dispersionen enthaltend Organopolysiloxan-Polyharnstoff-Copolymere der Formel

R³-[(A)ₐ(B)_{b}]-R³ (I),

worin
(A) einen Rest der Formel

   -[NH-Z-NH-CO-ND-Y-SiR₂- (O-SiR₂)ᵣ-O-SiR₂-Y-ND-CO] - (II)

   und
(B) einen Rest der Formel

   -[NH-Z-NH-CO-E-X-E-CO]- (III)

   darstellen, wobei

- **X**: gleich oder verschieden sein kann und einen gegebenenfalls durch Fluor, Chlor, C₁-C₆-Alkyl oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder gegebenenfalls substituierte Arylenrest mit 6 bis 22 Kohlenstoffatomen bedeutet,
- **Y**: gleich oder verschieden sein kann und einen Kohlenwasserstoffrest mit 1 bis 30 Kohlenstoffatomen, in dem einander nicht benachbarte Methyleneinheiten durch Gruppen -O- ersetzt sein können, bedeutet,
- **Z**: gleich oder verschieden sein kann und einen zweiwertigen, gegebenenfalls durch Fluor oder Chlor substituierten Kohlenwasserstoffrest mit 1 bis 30 Kohlenstoffatomen bedeutet,
- **D**: gleich oder verschieden sein kann und Wasserstoffatom, einen gegebenenfalls substituierten Kohlenwasserstoffrest oder einen Rest -R₂Si-X-NH₂ darstellt,
- **E**: gleich oder verschieden sein kann und ein Sauerstoffatom oder eine Aminogruppe -NR²- ist,
- **R**: gleich oder verschieden sein kann und einen einwertigen, gegebenenfalls durch Fluor oder Chlor substituierten Kohlenwasserstoffrest mit 1 bis 20 Kohlenstoffatomen oder einen Rest -OR⁴ mit R⁴ gleich einer für R² angegebenen Bedeutung bedeutet,
- **R²**: gleich oder verschieden sein kann und Wasserstoffatom oder einen Kohlenwasserstoffrest mit 1 bis 22 Kohlenstoffatomen bedeutet,
- **R³**: gleich oder verschieden sein kann und Reste -NH-Z-NCO, -CO-E-X-E-H und -CO-ND-Y-SiR₂-(O-SiR₂)ᵣ-O-SiR₂-Y-NDH, bevorzugt -CO-E-X-E-H und -CO-ND-Y-SiR₂-(O-SiR₂)ᵣ-O-SiR₂-Y-NDH, bedeutet,
- **r**: 0 oder eine ganze Zahl von 1 bis 4000, bevorzugt von 30 bis 4000, besonders bevorzugt 40 bis 3000,
- **a**: eine ganze Zahl größer als 1 ist
- **b**: 0 oder eine ganze Zahl von 1 bis 2000, bevorzugt 0, ist, mit der Maßgabe, dass die einzelnen Blöcke (A) und (B) statistisch verteilt sein können (R³-[(A)ₐ-*stat*-(B)_{b}]-R³).

Im Rahmen der vorliegenden Erfindung sollen von dem Begriff Organopolysiloxane sowohl polymere, oligomere wie auch dimere Siloxane mitumfasst werden.

Beispiele für zweiwertige Reste Z sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste; Arylenreste, wie der Phenylen- und der Naphthylenrest; Alkarylenreste, wie o-, m-, p-Tolylenreste, Xylylenreste und Ethylphenylenreste; Aralkylenreste, wie der Benzylenrest, der α- und der β-Phenylethylenrest.

Bevorzugt handelt es sich bei Rest Z um Alkylengruppen mit 1 bis 24 Kohlenstoffatomen, besonders bevorzugt um Hexylen-, 4,4'-Methylen-biscyclohexylen- und 3-Methylen-3,5,5-trimethylcyclohexylenrest.

Beispiele für Rest Y sind die für Z angegebenen Beispiele.

Bei Rest Y handelt es sich bevorzugt um Alkylenreste mit 1 bis 30 Kohlenstoffatomen, in dem einander nicht benachbarte Methyleneinheiten durch Gruppen -O- ersetzt sein können, oder um Arylenreste mit 6 bis 22 Kohlenstoffatomen. Besonders bevorzugt handelt es sich bei Rest Y um Alkylengruppen mit 1 bis 3 Kohlenstoff-Atomen, besonders bevorzugt mit 3 Kohlenstoff-Atomen.

Beispiele für Rest X sind Butylenrest, Ethylenrest, Hexylenrest, -(CH₂)₃-(O-CH(CH₃)-CH₂)₂₋₃₀₀₀-O-(CH₂)₃-, -CH(CH₃)-CH₂-(O-CH(CH₃)-CH₂)₂₋₃₀₀₀-, -(CH₂)₃-(O-CH₂-CH₂)₂₋₃₀₀-O-(CH₂)₃- und -CH₂-CH₂-(OCH₂-CH₂)₂₋₃₀₀-.

Bei Rest X handelt es sich bevorzugt um Polyetherreste, besonders bevorzugt um Polypropylenglykolreste, insbesondere um solche mit 2 bis 600 Kohlenstoffatomen.

Beispiele für Rest R und R² sind jeweils unabhängig voneinander Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und der Naphthylrest; Alkarylreste, wie o-, m-, p-Tolylreste, Xylylreste und Ethylphenylreste; Aralkylreste, wie der Benzylrest, der α- und der β-Phenylethylrest.

Weitere Beispiele für Rest R sind Alkoxyreste, wie der Methoxy-, Ethoxy- und Methoxyethoxyrest.

Bevorzugt handelt es sich bei Rest R um einen Kohlenwasserstoffrest mit 1 bis 6 Kohlenstoffatomen, besonders bevorzugt um einen Alkylrest mit 1 bis 4 Kohlenstoffatomen, insbesondere um den Methylrest.

Bevorzugt handelt es sich bei Rest R² um Wasserstoffatom und Methyl-, Ethyl-, Phenyl- oder Cyclohexylreste, wobei Wasserstoffatom und Methylrest besonders bevorzugt sind.

Beispiele für Kohlenwasserstoffreste D sind die für R oben angegebenen Reste.

Bei Rest D handelt es sich bevorzugt um einen Alkylrest oder Wasserstoffatom, besonders bevorzugt um Wasserstoffatom oder einen Alkylrest mit 1 bis 12 Kohlenstoffatomen, insbesondere um Wasserstoffatom.

Bei Rest E handelt es sich bevorzugt um Sauerstoffatom oder Stickstoffatom, besonders bevorzugt um Sauerstoffatom.

Bevorzugt hat a die Bedeutung einer ganzen Zahl von 1 bis 1000, besonders bevorzugt von 5 bis 1000.

Beispiele für Reste R³ sind Reste, die sich von den nicht umgesetzten Endgruppen aus den eingesetzten Edukten ergeben, wie etwa Reste -NH-(CH₂)₆-NCO, -CO-O-(CH₂)₄-OH, -CO-NH-(CH₂)₂-NH₂, -CO-NH-(CH₂)₃-Si(CH₃)₂-(O-Si(CH₃)₂)₄₀-O-Si(CH₃)₂-(CH₂)₃-NH₂ und -CO-NH-(CH₂)-Si(CH₃)₂-(O-Si(CH₃)₂)₁₅-O-Si(CH₃)₂-(CH₂)-NH₂.

Bei den Copolymeren der Formel (I) handelt es sich bevorzugt um solche mit b=0, da hier ausschließlich Siloxanketten vorliegen und somit die Vorteile dieser Polymere, wie Transparenz, UV-Stabilität, niedrige Oberflächenenergien erhalten werden.

Beispiele für Copolymere der Formel (I) sind
OCN-(CH₂)₆-NH-{[CO-NH-(CH₂)₃-Si(CH₃)₂-(O-Si(CH₃)₂)₁₀₀-O-Si(CH₃)₂-(CH₂)₃-NH-CO-NH-(CH₂)₆-NH]₅₀-*stat*-[CO-O-(CH₂)₄-O-CO-NH-(CH₂)₆-NH]₁₀}-CO-NH-(CH₂)₆-NCO,
OCN-(C₆H₁₀-CH₂-C₆H₁₀)-NH-{[CO-NH-(CH₂)₃-Si(CH₃)₂-(O-Si(CH₃)₂)₁₀₀-O-Si(CH₃)₂-(CH₂)₃-NH-CO-NH-(C₆H₁₀-CH₂-C₆H₁₀)-NH]₅₀-*stat*-[CO-NH-(CH₂)₂-NH-CO-NH-(C₆H₁₀-CH₂-C₆H₁₀)-NH]₁₀}-CO-NH-(C₆H₁₀-CH₂-C₆H₁₀)-NCO, H₂N-(CH₂)₃-Si(CH₃)₂-(O-Si(CH₃)₂)₄₀-O-Si(CH₃)₂-(CH₂)₃-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀}-NH-(CH₂)₆-NH-(CH₂)₃-Si(CH₃)₂-(O-Si(CH₃)₂)₄₀-O-Si(CH₃)₂-(CH₂)₃-NH₂,
H₂N-(CH₂)₃-Si(CH₃)₂-(O-Si(CH₃)₂)₄₀-O-Si(CH₃)₂-(CH₂)₃-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀-s*tat-*[NH-(CH₂)₆-NH-CO-O-(CH₂)₄-O-CO]₁₀}-NH-(CH₂)₆-NH-CO-NH-(CH₂)₃-Si(CH₃)₂-(O-Si(CH₃)₂)₄₀-O-Si(CH₃)₂-(CH₂)₃-NH₂, H₂N-(CH₂)₂-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀}-NH-(CH₂)₆-NH-(CH₂)₂-NH₂, HO-(CH₂)₄-O-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀-*stat*-[NH-(CH₂)₆-NH-CO-O-(CH₂)₄-O-CO]₁₀}-NH-(CH₂)₆-NH-CO-O-(CH₂)₄-OH,
H₂N-(CH₂)₃-Si(CH₃)₂-(O-Si(CH₃)₂)₄₀-O-Si(CH₃)₂-(CH₂)₃-NH-CO-{[NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH-CO]₅₀}-NH-(C₆H₁₀-CH₂-C₆H₁₀)-NH-(CH₂)₃-Si(CH₃)₂-(O-Si(CH₃)₂)₄₀-O-Si(CH₃)₂-(CH₂)₃-NH₂ und
H₂N-(CH₂)₃-Si(CH₃)₂-(O-Si(CH₃)₂)₄₀-O-Si(CH₃)₂-(CH₂)₃-NH-CO-{[NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH-CO]₅₀-*stat*-[NH-(C₆H₁₀-CH₂-C₆H₁₀)-NH-CO-O-(CH₂)₄-O-CO]₁₀}-NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH₂ wobei
H₂N-(CH₂)₃-Si(CH₃)₂-(O-Si(CH₃)₂)₄₀-O-Si(CH₃)₂-(CH₂)₃-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀}-NH-(CH₂)₆-NH-(CH₂)₃-Si(CH₃)₂-(O-Si(CH₃)₂)₄₀-O-Si(CH₃)₂-(CH₂)₃-NH₂,
H₂N-(CH₂)₃-Si(CH₃)₂-(O-Si(CH₃)₂)₄₀-O-Si(CH₃)₂-(CH₂)₃-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀-*stat*-[NH-(CH₂)₆-NH-CO-O-(CH₂)₄-O-CO]₁₀}-NH-(CH₂)₆-NH-CO-NH-(CH₂)₃-Si(CH₃)₂-(O-Si(CH₃)₂)₄₀-O-Si(CH₃)₂-(CH₂)₃-NH₂,
H₂N-(CH₂)₃-Si(CH₃)₂-(O-Si(CH₃)₂)₄₀-O-Si(CH₃)₂-(CH₂)₃-NH-CO-{[NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH-CO]₅₀}-NH-(C₆H₁₀-CH₂-C₆H₁₀)-NH-(CH₂)₃-Si(CH₃)₂-(O-Si(CH₃)₂)₄₀-O-Si(CH₃)₂-(CH₂)₃-NH₂ und
H₂N-(CH₂)₃-Si(CH₃)₂-(O-Si(CH₃)₂)₄₀-O-Si(CH₃)₂-(CH₂)₃-NH-CO-{[NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH-CO]₅₀-*stat*-[NH-(C₆H₁₀-CH₂-C₆H₁₀)-NH-CO-O-(CH₂)₄-O-CO]₁₀}-NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH₂ bevorzugt und
H₂N-(CH₂)₃-Si(CH₃)₂-(O-Si(CH₃)₂)₄₀-O-Si(CH₃)₂-(CH₂)₃-NH-CO-{[NH-(CH₂)₆-NH-CO-NH-(CH₂)₃-Si(CH₃)₂-(O-Si(CH₃)₂)₄₀-O-Si(CH₃)₂-(CH₂)₃-NH-CO]₅₀}-NH-(CH₂)₆-NH-(CH₂)₃-Si(CH₃)₂-(O-Si(CH₃)₂)₄₀-O-Si(CH₃)₂-(CH₂)₃-NH₂ und
H₂N-(CH₂)₃-Si(CH₃)₂-(O-Si(CH₃)₂)₄₀-O-Si(CH₃)₂-(CH₂)₃-NH-CO-{[NH-(C₆H₁₀-CH₂-C₆H₁₀)-NH-CO-NH-(CH₂)₃-Si(CH₃)₂-(O-Si(CH₃)₂)₄₀-O-Si(CH₃)₂-(CH₂)₃-NH-CO]₅₀)-NH-(C₆H₁₀-CH₂-C₆H₁₀)-NH-(CH₂)₃-Si(CH₃)₂-(O-Si(CH₃)₂)₄₀-O-Si(CH₃)₂-(CH₂)₃-NH₂ besonders bevorzugt sind.

Die Copolymere der Formel (I) haben einen Siloxangehalt von bevorzugt über 70 Gew.-%, besonders bevorzugt über 80 Gew.-%, jeweils bezogen auf das Gesamtgewicht des Copolymers.

Die Copolymere der Formel (I) weisen innerhalb des Moleküls bevorzugt keine ionischen Gruppen auf.

Die Copolymere der Formel (I), welche in den erfindungsgemäßen Dispersionen enthalten sind, haben eine inhärente Viskosität von bevorzugt kleiner 2,0 g/dL (gemessen in Chloroform).

Die erfindungsgemäßen Dispersionen können zusätzlich zu den Copolymeren der Formel (I) und Wasser alle weiteren Stoffe enthalten, die auch bisher zur Herstellung von wäßrigen Dispersionen verwendet worden sind, wie beispielsweise Emulgatoren und Schutzkolloide.

Beispiele für Emulgatoren sind alle an sich bekannte Emulgatoren, wie etwa anionische, nichtionische, kationische und ampholytische Emulgatoren.

Beispiele für nichtionische Emulgatoren sind
1. Polyvinylalkohol, der noch 5 bis 50 %, vorzugsweise 8 bis 20 % Vinylacetateinheiten aufweist, mit einem Polymerisationsgrad von 500 bis 3000.
2. Alkylpolyglycolether, vorzugsweise solche mit 8 bis 40 EO-Einheiten und Alkylresten von 8 bis 20 C-Atomen.
3. Alkylarylpolyglycolether, vorzugsweise solche mit 8 bis 40 EO-Einheiten und 8 bis 20 C-Atomen in den Alkyl- und Arylresten.
4. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
   Beispiele für kationische Emulgatoren sind
5. Quarternäre Alkyl- und Alkylbenzolammoniumsalze, insbesondere solche, deren Alkylgruppen 6 bis 24 C-Atome besitzen, insbesondere die Halogenide, Sulfate, Phosphate und Acetate.
6. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

Bevorzugt werden in den erfindungsgemäßen Dispersionen als Emulgatoren Polyvinylalkohol und Alkylpolyglycolether eingesetzt.

Die erfindungsgemäße wässrige Dispersion enthält Emulgatoren in Mengen von 1 bis 10 Gew.-%, besonders bevorzugt 1 bis 5 Gew.-%, jeweils bezogen auf das Gesamtgewicht an Copolymer und Wasser.

Beispiele für Schutzkolloide sind Polyvinylalkohol, der noch 5 bis 50 %, vorzugsweise 8 bis 20 % Vinylacetateinheiten aufweist, mit einem Polymerisationsgrad von 500 bis 3000, Celluloseether, Polyacrylate, Polyvinylpyrrolidon, Stärken, Proteine und hochpolymere Naturstoffe wie Alginate oder Pflanzengummi.

Bevorzugt haben die erfindungsgemäßen Dispersionen einen Feststoffgehalt von 10 bis 80 Gewichtsprozent, besonders bevorzugt von 25 bis 60 Gewichtsprozent.

Die erfindungsgemäßen Dispersionen haben den Vorteil, dass sie frei von ionischen Gruppen sind.

Des weiteren haben die erfindungsgemäßen Dispersionen den Vorteil, dass sie in der Verwendung ökologische Vorteile gegenüber in organischen Lösemitteln gelösten Copolymeren der gleichen Art haben.

Ein weiterer Gegenstand der vorliegenden Erfindung ist ein Verfahren zur Herstellung der erfindungsgemäßen Dispersionen, dadurch gekennzeichnet, dass
(a) aminoterminiertes Organopolysiloxan,
(b) Diisocyanat,
(c) Wasser,
(d) Brönstedt-Säure,
   gegebenenfalls
(e) grenzflächenaktives Agens,
(f) Base,
   gegebenenfalls
(g) polyfunktionelle Amine, die von (a) verschieden sind,
   und gegebenenfalls
(h) polyfunktionelle Isocyanate, die von (b) verschieden sind, miteinander umgesetzt werden.

Bevorzugt wird (a) in einer solchen Menge eingesetzt, dass das entstandene Copolymer der Formel (I) einen Siloxangehalt von bevorzugt über 70 Gew.-%, besonders bevorzugt über 80 Gew.-%, jeweils bezogen auf das Gesamtgewicht des Copolymers, aufweist Gemäß einer bevorzugten Ausführungsform des erfindungsgemäßen Verfahrens wird
in einem ersten Schritt
(a) ggf. im Gemisch mit (g) in (d) und (c) ggf. mit Hilfe von
(e) dispergiert,
   in einem zweiten Schritt
(b) sowie ggf. (h) zugegeben, wobei (b) und/oder (h), falls erwünscht, vor der Zugabe in (c) ggf. mit Hilfe von (e) dispergiert werden können, und
   in einem dritten Schritt
(f) in einer Menge zugegeben, die ausreicht, (d) zu neutralisieren.

Bevorzugt handelt es sich bei der erfindungsgemäß eingesetzten Komponente (a) um Organopolysiloxane mit mindestens zwei terminalen, gegenüber Isocyanat reaktionsfähigen Aminogruppen, besonders bevorzugt um solche der Formel

H-ND-Y-SiR₂-(O-SiR₂)ᵣ-OSiR₂-Y-ND-H (IV),

wobei
R, D, Y und r die oben genannte Bedeutung haben.

Komponente (a) sind handelsübliche Produkte bzw. können nach in der Siliciumchemie gängigen Verfahren hergestellt werden, wie etwa nach EP 1 201 699 A.

Bevorzugt handelt es sich bei der erfindungsgemäß eingesetzten Komponente (b) um beliebige organische Diisocyanate, besonders bevorzugt um Diisocyanate der Formel

OCN-Z-NCO (V),

wobei Z die oben genannte Bedeutung hat.

Komponente (b) sind handelsübliche Produkte bzw. können nach in der Chemie gängigen Verfahren hergestellt werden.

Im erfindungsgemäßen Verfahren werden Komponente (a) und (b) in solchen Mengen eingesetzt, dass das molare Verhältnis der gegenüber NCO-Gruppen reaktiven Aminogruppen in (a) zu den Isocyanatgruppen in (b) bevorzugt 0,95:1 bis 1,05:1 beträgt, besonders bevorzugt 1:1.

Vorteilhafterweise ist die Reaktivität der Isocyanate (b) bevorzugt gering gegenüber Wasser (c) im Vergleich mit den Aminen (a). Besonders bevorzugt werden deshalb Isocyanate Y(NCO)₂ verwendet, in denen Y ein aliphatischer Rest ist.

Bevorzugt handelt es sich bei der erfindungsgemäß eingesetzten Komponente (d) um protonierende Säuren, wie z.B. Salzsäure, Schwefelsäure oder Essigsäure, wobei Salzsäure und Schwefelsäure besonders bevorzugt sind.

Im erfindungsgemäßen Verfahren wird Komponente (d) in solchen Mengen eingesetzt, dass das molare Verhältnis der gegenüber NCO-Gruppen reaktiven Aminogruppen in (a) zu den Protonen in (d) 1:95 bis 1:2 beträgt, besonders bevorzugt 1:1.

Bevorzugt handelt es sich bei der im erfindungsgemäßen Verfahren gegebenenfalls eingesetzten Komponente (e) um Emulgatoren und Schutzkolloide, wobei kationische und nicht-ionische Tenside sowie deren Gemische besonders bevorzugt sind, insbesondere nicht-ionische Tenside.

Falls im erfindungsgemäßen Verfahren Komponente (e) eingesetzt wird, handelt es sich um Mengen von bevorzugt 1 bis 30 Gewichtsprozent, besonders bevorzugt 5 bis 20 Gewichtsprozent, jeweils bezogen auf das Gesamtgewicht an Komponente (a) und (b) .

Die verwendeten Basen (f) besitzen die Eigenschaft, die durch (d) protonierten Aminogruppen von (a) zur Reaktion mit (b) freizusetzen.

Bevorzugt handelt es sich bei der erfindungsgemäß eingesetzten Komponente (f) um anorganische Basen, wie z.B. Natrium- und Kaliumhydroxidlösungen und Natriumcarbonat, wobei Natrium- und Kaliumhydroxidlösungen besonders bevorzugt sind.

Bevorzugt handelt es sich bei der im erfindungsgemäßen Verfahren gegebenenfalls eingesetzten Komponente (g) um solche der Formel

H-E-X-E-H (VI),

worin E und X die oben genannte Bedeutung haben.

Falls im erfindungsgemäßen Verfahren Komponente (g) eingesetzt wird, was jedoch nicht bevorzugt ist, handelt es sich um Mengen von bevorzugt 10 bis 40 Gewichtsprozent, besonders bevorzugt 10 bis 20 Gewichtsprozent, jeweils bezogen auf das Gesamtgewicht an Komponente (a) und (b).

Bevorzugt handelt es sich bei der im erfindungsgemäßen Verfahren gegebenenfalls eingesetzten Komponente (h) um Triphenylmethane-triisocyanat, 1-Methylbenzol-2,4,6-triisocyanat, 1,3,5-Trimethylbenzol-2,4,6-triisocyanat, Naphthalin-1,3,7-triisocyanat, Biphenyl-1,3,7-triisocyanat, Diphenylmethan-2,4,4'-triisocyanat, 3-Methyldiphenylmethan-4,6,4'-triisocyanat und Kondensate des Hexamethylendiisocyanats (HDI) oder des Isophorondiisocyanats (IPDI) vom Biurettyp oder Trimertyp (Isocyanurat).

Falls im erfindungsgemäßen Verfahren Komponente (h) eingesetzt wird, was jedoch nicht bevorzugt ist, handelt es sich um Mengen von bevorzugt 1 bis 10 Gewichtsprozent, besonders bevorzugt 1 bis 5 Gewichtsprozent, jeweils bezogen auf das Gesamtgewicht an Komponente (a) und (b).

Wesentliches Kennzeichen des erfindungsgemäßen Verfahrens ist, dass die Aminogruppen in Komponente (a) und (g) nicht als solche, sondern in Form von zumindest teilweise, bevorzugt zu mehr als 90%, protonierten Aminen zum Einsatz gelangen.

Zur Durchführung des erfindungsgemäßen Verfahrens werden Komponente (a) ggf. im Gemisch mit Komponente (g) mit Komponente (d) protoniert und in Wasser (c) ggf. unter Einsatz von grenzflächeaktivem Agens (e) dispergiert, sodann die Isocyanate (b) sowie ggf. (h) zugefügt. Die Freisetzung der protonierten Amine durch Hinzufügen von Base (f) erfolgt bevorzugt danach, so dass zuerst durch Diffusion der Isocyanate in die Emulsionspartikel ein homogenes Gemisch entsteht.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren wird bei Temperaturen von bevorzugt 0 bis 90°C, besonders bevorzugt bei 20 bis 50°C, und einem Druck von 700 bis 1500 hPa durchgeführt.

Bei dem erfindungsgemäßen Verfahren können als Mischer alle Aggregate eingesetzt werden, die für die Erzeugung von Dispersionen dem Fachmann bekannt sind, wie z.B. Dissolverrührer oder Rotor-Stator-Mischer.

Das erfindungsgemäße Verfahren hat den Vorteil, dass es einfach in der Durchführung ist und homogene Dispersionen erhalten werden.

Des weiteren hat das erfindungsgemäße Verfahren den Vorteil, dass Dispersionen von Organopolysiloxan-Polyharnstoff-Blockcopolymeren mit hohem Siloxananteil, frei von ionischen Gruppen hergestellt werden können.

Ferner hat das erfindungsgemäße Verfahren den Vorteil, dass zur Durchführung keine organischen Lösungsmittel benötigt werden.

Die erfindungsgemäßen bzw. erfindungsgemäß hergestellten Dispersionen können für alle Zwecke eingesetzt werden, für die auch bisher Dispersionen enthaltend Organopolysiloxan-Polyharnstoff-Copolymere eingesetzt wurden. Hierzu können diese weiterverarbeitet werden und durch den Zusatz von z.B. Füllstoffen und Additiven und das Abmischen mit anderen Dispersionen in Zubereitungen für den endgültigen Verwendungszweck überführt werden. Insbesondere eignen sich die erfindungsgemäßen bzw. erfindungsgemäß hergestellten Dispersionen zur Beschichtung von Oberflächen, Imprägnierung von Textilien, in bzw. als Kleb- und Dichtstoffe.

Ein weiterer Gegenstand der vorliegenden Erfindung ist ein Verfahren zur Beschichtung von Substraten, dadurch gekennzeichnet, dass die erfindungsgemäßen bzw. erfindungsgemäß hergestellten Dispersionen auf das Substrat aufgetragen und dann die beschichteten Substrate getrocknet werden.

Das erfindungsgemäße Auftragen kann durch Streichen, Spritzen, Aufrakeln oder Tauchen erfolgen.

Das erfindungsgemäße Trocknen kann bei erhöhter Temperatur erfolgen, d.h. bei Temperaturen von 80 bis 250 °C und dem Druck der umgebenden Atmosphäre.

Bei den im erfindungsgemäßen Verfahren eingesetzten Substraten handelt es sich bevorzugt um textile Flächengebilde, Leder, Lackoberflächen und silikatische Baustoffe, besonders bevorzugt um textile Flächengebilde.

Das erfindungsgemäße Verfahren zur Beschichtung von Substraten (ohne Trocknung) wird bei Temperaturen von bevorzugt 5 bis 90°C, besonders bevorzugt bei 15 bis 60°C, und einem Druck von 700 bis 1500 hPa durchgeführt.

Das erfindungsgemäße Verfahren zur Beschichtung von Substraten hat den ökologischen Vorteil, dass keine in organischen Lösemitteln gelösten Copolymere verwendet werden.

In den nachstehend beschriebenen Beispielen beziehen sich alle Angaben von Teilen mit Prozentsätzen, falls nicht anders angegeben, auf das Gewicht. Des Weiteren beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1

30 g aminopropyl-terminiertes Polydimethylsiloxan (M_{w} ca. 3200 g/mol) werden in eine Mischung aus 210 ml 0,1 N Salzsäure, 200 ml Wasser und 2,0 g eines ethoxylierten C13-Oxoalkohols (käuflich erhältlich unter der Marke Lutensol® TO5 bei der BASF AG, Deutschland) gegossen und mit einem schnelllaufenden Rührer (ULTRA-TURRAX®) dispergiert. Dann werden 3,7 g Isophorondiisocyanat zugegeben, dann eine Lösung von 0,83 g NaOH in 100 ml Wasser zügig zugetropft und noch 1 Stunde lang gerührt. Es wird eine homogene, weiße, nicht sedimentierende Dispersion erhalten, mit einem Feststoffgehalt von 6,7%.

Durch nochmaliges starkes Scheren (ULTRA-TURRAX®) der so erhaltenen Dispersion kann die Emulsion gebrochen werden. Es wird dann nach einigen Stunden ein Klumpen thermoplastisches Material erhalten, der in polaren organischen Lösemitteln wie THF löslich ist.

### Beispiel 2

30 g aminopropyl-terminiertes Polydimethylsiloxan (M_{w} ca. 3200 g/mol) werden in eine Mischung aus 210 ml 0,1 N Salzsäure, und 1,5 g eines ethoxylierten C13-Oxoalkohols (käuflich erhältlich unter der Marke Lutensol® TO5 bei der BASF AG, Deutschland) und 1,5 g einer 30%igen Lösung eines Polyvinylalkohols (käuflich erhältlich unter der Bezeichnung "POLYVIOL® -Lösung LL 2960/1" der Fa. Wacker Polymer Systems GmbH&Co.KG, Burghausen, Deutschland) gegossen und mit einem schnelllaufenden Rührer (ULTRA-TURRAX®) dispergiert. Dann werden 3,7 g Isophorondiisocyanat zugegeben, dann eine Lösung von 0,83 g NaOH in 100 ml Wasser zügig zugetropft und noch 1 Stunde lang gerührt. Es wird eine homogene Dispersion erhalten; der Feststoffgehalt beträgt 10,8%.

### Vergleichsbeispiel 1

Ein thermoplastisches Siloxan-Harnstoff-Copolymer (hergestellt in THF-Lösung aus aminopropyl-terminiertem Polydimethylsiloxan (M_{w} ca. 3200 g/mol) und Isophorondiisocyanat im molaren Verhältnis 1:1) mit einem Erweichungspunkt von 80°C wird in 200 ml Wasser und 2,0 g eines ethoxylierten C13-Oxoalkohols (käuflich erhältlich unter der Marke Lutensol® TO5 bei der BASF AG, Deutschland) unter starkem Rühren auf 100°C erhitzt. Es wird keine Dispersion erhalten.

## Patentansprüche

1. Wässrige Dispersionen enthaltend Organopolysiloxan-Polyharnstoff-Copolymere der Formel
R³-[(A)ₐ(B)_{b}]-R³ (I),
worin
(A) einen Rest der Formel
-[NH-Z-NH-CO-ND-Y-SiR₂-(O-SiR₂)ᵣ-O-SiR₂-Y-ND-CO]- (II)
und
(B) einen Rest der Formel
-[NH-Z-NH-CO-E-X-E-CO]- (III)
darstellen, wobei
**X** gleich oder verschieden sein kann und einen gegebenenfalls durch Fluor, Chlor, C₁-C₆-Alkyl oder C₁-C₆-Alkylester substituierten Alkylenrest mit 1 bis 700 Kohlenstoffatomen, in dem einander nicht benachbarte Methyleneinheiten durch Gruppen -O-, -COO-, -OCO-, oder -OCOO-, ersetzt sein können, oder gegebenenfalls substituierte Arylenrest mit 6 bis 22 Kohlenstoffatomen bedeutet,
**Y** gleich oder verschieden sein kann und einen Kohlenwasserstoffrest mit 1 bis 30 Kohlenstoffatomen, in dem einander nicht benachbarte Methyleneinheiten durch Gruppen -O- ersetzt sein können, bedeutet,
**Z** gleich oder verschieden sein kann und einen zweiwertigen, gegebenenfalls durch Fluor oder Chlor substituierten Kohlenwasserstoffrest mit 1 bis 30 Kohlenstoffatomen bedeutet,
**D** gleich oder verschieden sein kann und Wasserstoffatom, einen gegebenenfalls substituierten Kohlenwasserstoffrest oder einen Rest -R₂Si-X-NH₂ darstellt,
**E** gleich oder verschieden sein kann und ein Sauerstoffatom oder eine Aminogruppe -NR²- ist,
**R** gleich oder verschieden sein kann und einen einwertigen, gegebenenfalls durch Fluor oder Chlor substituierten Kohlenwasserstoffrest mit 1 bis 20 Kohlenstoffatomen oder einen Rest -OR⁴ mit R⁴ gleich einer für R² angegebenen Bedeutung bedeutet,
**R²** gleich oder verschieden sein kann und Wasserstoffatom oder einen Kohlenwasserstoffrest mit 1 bis 22 Kohlenstoffatomen bedeutet,
**R³** gleich oder verschieden sein kann und Reste -NH-Z-NCO, -CO-E-X-E-H und -CO-ND-Y-SiR₂-(O-SiR₂)ᵣ-O-SiR₂-Y-NDH, bevorzugt -CO-E-X-E-H und -CO-ND-Y-SiR₂-(O-SiR₂)ᵣ-O-SiR₂-Y-NDH, bedeutet,
**r** 0 oder eine ganze Zahl von 1 bis 4000, bevorzugt von 30 bis 4000, besonders bevorzugt 40 bis 3000,
**a** eine ganze Zahl größer als 1 ist
**b** 0 oder eine ganze Zahl von 1 bis 2000, bevorzugt 0, ist,
mit der Maßgabe, dass die einzelnen Blöcke (A) und (B) statistisch verteilt sein können (R³-[(A)ₐ-*stat*-(B)_{b}]-R³).

2. Dispersionen gemäß Anspruch 1, **dadurch gekennzeichnet, dass** b gleich 0 ist.

3. Dispersionen gemäß Anspruch 1 oder 2, **dadurch gekennzeichnet, dass** Rest E die Bedeutung von Sauerstoffatom hat.

4. Dispersionen gemäß einem oder mehreren der Ansprüche 1 bis 3, **dadurch gekennzeichnet, dass** die Copolymere der Formel (I) einen Siloxangehalt von über 70 Gew.-% aufweisen.

5. Verfahren zur Herstellung der erfindungsgemäßen Dispersionen, **dadurch gekennzeichnet, dass**
(a) aminoterminiertes Organopolysiloxan,
(b) Diisocyanat,
(c) Wasser,
(d) Brönstedt-Säure,
gegebenenfalls
(e) grenzflächenaktives Agens,
(f) Base,
gegebenenfalls
(g) polyfunktionelle Amine, die von (a) verschieden sind,
und gegebenenfalls
(h) polyfunktionelle Isocyanate, die von (b) verschieden sind, miteinander umgesetzt werden.

6. Verfahren nach Anspruch 5, **dadurch gekennzeichnet, dass**
in einem ersten Schritt
(a) ggf. im Gemisch mit (g) in (d) und (c) ggf. mit Hilfe von
(e) dispergiert wird,
in einem zweiten Schritt
(b) sowie ggf. (h) zugegeben wird, wobei (b) und/oder (h), falls erwünscht, vor der Zugabe in (c) ggf. mit Hilfe von (e) dispergiert werden können, und
in einem dritten Schritt
(f) in einer Menge zugegeben wird, die ausreicht, (d) zu neutralisieren.

7. Verfahren nach Anspruch 5 oder 6, **dadurch gekennzeichnet, dass** es sich bei Komponente (a) um Organopolysiloxane mit mindestens zwei terminalen, gegenüber Isocyanat reaktionsfähigen Aminogruppen der Formel
H-ND-Y-SiR₂- (O-SiR₂)ᵣ-OSiR₂-Y-ND-H (IV)
handelt, wobei
R, D, Y und r die oben genannte Bedeutung haben.

8. Verfahren nach einem oder mehreren der Ansprüche 5 bis 7, **dadurch gekennzeichnet, dass** es sich bei Komponente (b) um Diisocyanate der Formel
OCN-Z-NCO (V)
handelt, wobei Z die oben genannte Bedeutung hat.

9. Verfahren zur Beschichtung von Substraten, **dadurch gekennzeichnet, dass** Dispersionen gemäß Anspruch 1 oder hergestellt gemäß Anspruch 5 auf das Substrat aufgetragen und die beschichteten Substrate getrocknet werden.

10. Verfahren nach Anspruch 9, **dadurch gekennzeichnet, dass** die Beschichtung von Substraten (ohne Trocknung) bei Temperaturen von 5 bis 90°C und einem Druck von 700 bis 1500 hPa durchgeführt wird.

## Claims

1. Aqueous dispersions containing organopolysiloxane/polyurea copolymers of the formula
R³-[(A)ₐ(B)_{b}]-R³ (I),
in which
(A) is a radical of the formula
-[NH-Z-NH-CO-ND-Y-SiR₂-(O-SiR₂)ᵣ-O-SiR₂-Y-ND-CO]- (II)
and
(B) is a radical of the formula
-[NH-Z-NH-CO-E-X-E-CO]- (III)
in which
**X** may be identical or different and is an alkylene radical which is optionally substituted by fluorine, chlorine, C₁-C₆-alkyl or C₁-C₆-alkyl ester and has 1 to 700 carbon atoms and in which nonneighboring methylene units may be replaced by -O-, -COO-, -OCO- or -OCOO- groups, or optionally substituted arylene radical having 6 to 22 carbon atoms,
**Y** may be identical or different and is a hydrocarbon radical having 1 to 30 carbon atoms, in which nonneighboring methylene units may be replaced by -O- groups,
**Z** may be identical or different and is a divalent hydrocarbon radical optionally substituted by fluorine or chlorine and having 1 to 30 carbon atoms,
**D** may be identical or different and is a hydrogen atom, an optionally substituted hydrocarbon radical or an -R₂Si-X-NH₂ radical,
**E** may be identical or different and is an oxygen atom or an amino group -NR²-,
**R** may be identical or different and is a monovalent hydrocarbon radical optionally substituted by fluorine or chlorine and having 1 to 20 carbon atoms or an -OR⁴ radical in which R⁴ has the same meaning as that given for R²,
**R²** may be identical or different and is a hydrogen atom or a hydrocarbon radical having 1 to 22 carbon atoms,
**R³** may be identical or different and is -NH-Z-NCO, -CO-E-X-E-H and -CO-ND-Y-SiR₂-(O-SiR₂)ᵣ-O-SiR₂-Y-NDH radicals, preferably -CO-E-X-E-H and -CO-ND-Y-SiR₂-(O-SiR₂)ᵣ-O-SiR₂-Y-NDH,
**r** is 0 or an integer from 1 to 4000, preferably from 30 to 4000, particularly preferably from 40 to 3000,
**a** is an integer greater than 1 and
**b** is 0 or an integer from 1 to 2000, preferably 0,
with the proviso that the individual blocks (A) and (B) may be randomly distributed (R³-[(A)ₐ-*stat*-(B)_{b}]-R³).

2. Dispersions according to Claim 1, **characterized in that** b is 0.

3. Dispersions according to Claim 1 or 2, **characterized in that** radical E is an oxygen atom.

4. Dispersions according to one or more of Claims 1 to 3, **characterized in that** the copolymers of the formula (I) have a siloxane content of more than 70% by weight.

5. Process for the preparation of the dispersions according to the invention, **characterized in that**
(a) amino-terminated organopolysiloxane,
(b) diisocyanate,
(c) water,
(d) Brönstedt acid,
optionally
(e) surface-active agent,
(f) base,
optionally
(g) polyfunctional amines which differ from (a),
and optionally
(h) polyfunctional isocyanates which differ from (b)
are reacted with one another.

6. Process according to Claim 5, **characterized in that**
in a first step
(a), optionally as a mixture with (g), is dispersed in (d) and (c), optionally with the aid of (e),
in a second step
(b) and optionally (h) are added, it being possible, if desired, to disperse (b) and/or (h) before the addition in (c), optionally with the aid of (e), and
in a third step
(f) is added in an amount which is sufficient to neutralize (d).

7. Process according to Claim 5 or 6, **characterized in that** component (a) is an organopolysiloxane having at least two terminal amino groups reactive toward isocyanate, of the formula
H-ND-Y-SiR₂-(O-SiR₂)ᵣ-OSiR₂-Y-ND-H (IV)
in which
R, D, Y and r have the abovementioned meaning.

8. Process according to one or more of Claims 5 to 7, **characterized in that** component (b) is a diisocyanate of the formula
OCN-Z-NCO (V)
in which Z has the abovementioned meaning.

9. Process for the coating of substrates, **characterized in that** dispersions according to Claim 1 or prepared according to Claim 5 are applied to the substrate and the coated substrates are dried.

10. Process according to Claim 9, **characterized in that** the coating of substrates (without drying) is carried out at temperatures of from 5 to 90°C and at a pressure of from 700 to 1500 hPa.

## Revendications

1. Dispersions aqueuses contenant des copolymères de type organopolysiloxane-polyurée de formule
R³-[(A)ₐ(B)_{b}]-R³ (I)
où
(A) représente un radical de formule
-[NH-Z-NH-CO-ND-Y-SiR₂-(O-SiR₂)ᵣ-O-SiR₂-Y-ND-CO]- (II)
et
(B) représente un radical de formule
-[NH-Z-NH-CO-E-X-E-CO]- (III)
où
X peut être identique ou différent et signifie un radical alkylène comprenant 1 à 700 atomes de carbone, le cas échéant substitué par fluor, chlore, alkyle en C₁-C₆ ou ester d'alkyle en C₁-C₆, dans lequel des unités méthylène non adjacentes peuvent être remplacées par des groupes -O-, -COO-, -OCO-, ou -OCOO-, ou un radical arylène le cas échéant substitué comprenant 6 à 22 atomes de carbone,
Y peut être identique ou différent et signifie un radical hydrocarboné comprenant 1 à 30 atomes de carbone, dans lequel des unités méthylène non adjacentes peuvent être remplacées par des groupes -O-,
Z peut être identique ou différent et signifie un radical hydrocarboné divalent, le cas échéant substitué par fluor ou chlore comprenant 1 à 30 atomes de carbone,
D peut être identique ou différent et signifie un atome d'hydrogène, un radical hydrocarboné, le cas échéant substitué ou un radical -R₂Si-X-NH₂,
E peut être identique ou différent et représente un atome d'oxygène ou un groupe amino -NR²-,
R peut être identique ou différent et signifie un radical hydrocarboné monovalent, le cas échéant substitué par fluor ou chlore comprenant 1 à 20 atomes de carbone, ou un radical -OR⁴ où R⁴ présente une signification indiquée pour R²,
R² peut être identique ou différent et signifie un atome d'hydrogène ou un radical hydrocarboné comprenant 1 à 22 atomes de carbone,
R³ peut être identique ou différent et signifie les radicaux -NH-Z-NCO, -CO-E-X-E-H et -CO-ND-Y-SiR₂-(O-SiR₂)ᵣ-O-SiR₂-Y-NDH, de préférence -CO-E-X-E-H et -CO-ND-Y-SiR₂-(O-SiR₂)ᵣ-O-SiR₂-Y-NDH,
r vaut 0 ou un nombre entier de 1 à 4000, de préférence de 30 à 4000, de manière particulièrement préférée de 40 à 3000,
a est un nombre entier supérieur à 1,
b vaut 0 ou un nombre entier de 1 à 2000, de préférence 0,
à condition que des différents blocs (A) et (B) puissent être répartis statistiquement (R³-[(A)ₐ-stat-(B)_{b}]-R³).

2. Dispersions selon la revendication 1, **caractérisées**
**en ce que** b vaut 0.

3. Dispersions selon la revendication 1 ou 2, **caractérisées**
**en ce que** le radical E signifie un atome d'oxygène.

4. Dispersions selon l'une ou plusieurs des revendications 1 à 3, **caractérisées**
**en ce que** les copolymères de formule (I) présentent une teneur en siloxane supérieure à 70% en poids.

5. Procédé pour la préparation des dispersions selon l'invention, **caractérisé**
**en ce qu'**on transforme, les uns avec les autres,
(a) un organopolysiloxane terminé par amino,
(b) un diisocyanate,
(c) de l'eau,
(d) un acide de Brönstedt,
le cas échéant
(e) un agent tensioactif,
(f) une base,
le cas échéant
(g) des amines polyfonctionnelles qui sont différentes de (a),
et le cas échéant
(h) des isocyanates polyfonctionnels qui sont différents de (b).

6. Procédé selon la revendication 5, **caractérisé en ce que**
- dans une première étape
on disperse (a) le cas échéant en mélange avec (g) dans (d) et (c) le cas échéant à l'aide de (e),
- dans une deuxième étape
on ajoute (b) ainsi que le cas échéant (h), où (b) et/ou (h), si souhaité, peuvent être dispersés, avant l'addition dans (c), le cas échéant à l'aide de (e), et
- dans une troisième étape
(f) est ajouté en une quantité qui suffit pour neutraliser (d).

7. Procédé selon la revendication 5 ou 6, **caractérisé**
**en ce qu'**il s'agit, pour le composant (a) d'organopolysiloxanes présentant au moins deux groupes amino terminaux, aptes à une réaction avec isocyanate, de formule
H-ND-Y-SiR₂-(O-SiR₂)ᵣ-OSiR₂-Y-ND-H (IV)
où
R, D, Y et R ont la signification donnée plus haut.

8. Procédé selon l'une ou plusieurs des revendications 5 à 7, **caractérisé**
**en ce qu'**il s'agit, pour le composant (b), de diisocyanates de formule
OCN-Z-NCO
où Z a la signification donnée plus haut.

9. Procédé pour le revêtement de substrats, **caractérisé**
**en ce que** les dispersions selon la revendication 1 ou préparées selon la revendication 5 sont appliquées sur le substrat et les substrats revêtus sont séchés.

10. Procédé selon la revendication 9, **caractérisé**
**en ce que** le revêtement de substrats (sans séchage) est réalisé à des températures de 5 à 90°C et une pression de 700 à 1500 hPa.
